# EUROPÄISCHE PATENTANMELDUNG

(11) **EP 4 109 704 A1**
(43) Veröffentlichungstag der Anmeldung: **28.12.2022**
(21) Anmeldenummer: 21181231.8
(22) Anmeldetag: 23.06.2021
(51) Int. Cl.: H02J 7/00, H02J 7/02

(54) **LADEVORRICHTUNG FÜR AKKUBETRIEBENE, TRAGBARE SCHWEISSVORRICHTUNGEN UND AKKUBETRIEBENE, TRAGBARE SCHWEISSVORRICHTUNG MIT EINER SOLCHEN LADEVORRICHTUNG**

(71) Anmelder: FRONIUS INTERNATIONAL GmbH, 4643 Pettenbach (AT)
(72) Erfinder: Andreas, STARZENGRUBER, 4643 Pettenbach (AT)
(74) Vertreter: SONN Patentanwälte OG

(57) **Zusammenfassung**

Die Erfindung betrifft eine Ladevorrichtung (1) für akkubetriebene, tragbare Schweißvorrichtungen (S), mit einem AC-Eingang (2), einem DC-Ausgang (3), einem AC/DC-Wandler (4), einem DC/DC-Wandler (5), einer Überwachungseinheit (6) zur Überwachung des DC-Ausgangs (3) und mit einer Steuereinrichtung (7) zur Steuerung und/oder Regelung des Ladevorgangs, sowie eine akkubetriebene, tragbare Schweißvorrichtung (S) mit einer solchen Ladevorrichtung (1). Erfindungsgemäß ist ein AC-Ausgang (8) vorgesehen, und sind der AC/DC-Wandler (4) und der DC/DC-Wandler (5) bidirektional ausgebildet, sodass die Energie einer am DC-Ausgang (3) anschließbaren DC-Quelle (Q) zur Versorgung einer am AC-Ausgang (8) anschließbaren Last (L) umwandelbar ist.

## Beschreibung

Die Erfindung betrifft Ladevorrichtung für akkubetriebene, tragbare Schweißvorrichtungen, mit einem AC-Eingang, einem DC-Ausgang, einem AC/DC-Wandler, einem DC/DC-Wandler, einer Überwachungseinheit zur Überwachung des DC-Ausgangs und mit einer Steuereinrichtung zur Steuerung und/oder Regelung des Ladevorgangs.

Weiters betrifft die Erfindung eine akkubetriebene, tragbare Schweißvorrichtung mit einem Akkumulator.

Für besonders schwer zugängliche Orte, an welchen eine Schweißung vorgenommen werden soll, wie z.B. auf einem Gerüst oder auch für Schweißungen, bei denen eine direkte Versorgung mit elektrischer Energie unzulässig ist, wie z.B. in einem Kessel, ist die Verwendung von tragbaren akkubetriebenen Schweißvorrichtungen besonders vorteilhaft oder essentiell. Beispielsweise beschreibt die EP 1 535 691 B1 ein tragbares Schweißgerät mit einem auswechselbaren Energiespeicher.

Zur Aufladung des Akkumulators der tragbaren Schweißvorrichtung werden entsprechende Ladevorrichtungen verwendet, welche die Wechselspannung des Versorgungsnetzes in eine für die Ladung des Akkumulators notwendige Gleichspannung umwandeln.

Die EP 2 882 559 B1 beschreibt eine tragbare Schweißvorrichtung mit einer zugehörigen Ladevorrichtung, wobei die Ladung des Ackumulators der Schweißvorrichtung in Abhängigkeit des Betriebsmodus der Schweißvorrichtung vorgenommen wird.

Aus der CN 103128419 A ist ein akkubetriebenes, tragbares Schweißgerät mit einem bidirektionalen Wechselrichter bekannt geworden, welches auch über einen AC-Ausgang verfügt, um während der Nichtverwendung des Schweißgeräts über die Energie der Akkumulatoren andere Geräte mit Wechselspannung versorgen und betreiben zu können.

Die Aufgabe der vorliegenden Erfindung besteht in der Schaffung einer Ladevorrichtung für akkubetriebene, tragbare Schweißvorrichtungen und akkubetriebene, tragbare Schweißvorrichtungen mit einer solchen Ladevorrichtung, welche einen Betrieb von verschiedenen AC-betriebenen Geräten über den Akkumulator der Schweißvorrichtung oder auch andere Akkumulatoren erlauben. Dadurch soll neben der akkubetriebenen tragbaren Schweißvorrichtung auch abseits einer Versorgung mit elektrischer Energie auch der Betrieb anderer elektrischer Geräte möglich sein, ohne dass dafür eine eigene Energiequelle bereitgestellt werden muss. Die Ladevorrichtung sowie die Schweißvorrichtung sollen möglichst einfach und kostengünstig aufgebaut sein.

Die Aufgabe wird durch eine Ladevorrichtung der oben angegebenen Art gelöst, bei der ein AC-Ausgang vorgesehen ist, und der AC/DC-Wandler und der DC/DC-Wandler bidirektional ausgebildet sind, sodass die Energie einer am DC-Ausgang anschließbaren DC-Quelle zur Versorgung einer am AC-Ausgang anschließbaren Last umwandelbar ist. Demnach kann die Ladevorrichtung in beide Richtungen betrieben werden, nämlich einerseits zur Umwandlung der Wechselspannung eines Versorgungsnetzes in eine geeignete Gleichspannung zum Laden des Akkumulators der akkubetriebenen, tragbaren Schweißvorrichtung und andererseits zum Umwandeln der Gleichspannung des Akkumulators der akkubetriebenen, tragbaren Schweißvorrichtung oder auch einer anderen DC-Quelle in eine gewünschte Wechselspannung, welche an den AC-Ausgang der Ladevorrichtung angelegt wird. Dadurch können mit der Ladevorrichtung auch fern dem Versorgungsnetz verschiedene AC-betriebene Geräte über den Akkumulator der Schweißvorrichtung oder eine andere DC-Quelle mit elektrischer Energie versorgt werden. Die Ladevorrichtung kann als eigenständiges Gerät ausgebildet sein mit entsprechenden Verbindungsleitungen zur Verbindung mit dem Versorgungsnetz und zur Verbindung mit dem Ladestecker der zu ladenden akkubetriebenen, tragbaren Schweißvorrichtung. Alternativ zu einer Verbindungsleitung zur Verbindung mit dem Ladestecker der Schweißvorrichtung kann auch eine Aufnahme für den zu ladenden Akkumulator an der Ladevorrichtung angeordnet sein. Schließlich kann die Ladevorrichtung auch mit der Schweißvorrichtung verbindbar oder kuppelbar ausgeführt oder auch in der Schweißvorrichtung integriert sein. Die gegenständliche Ladevorrichtung bietet somit neben der grundsätzlichen Funktion des Ladens des Akkus der Schweißvorrichtung eine zusätzliche Funktion als Wechselrichter, mit dem die Gleichspannung des Akkumulators der Schweißvorrichtung oder einer anderen DC-Quelle in eine Wechselspannung umgewandelt wird, um AC-betriebene Geräte, wie zum Beispiel Bohrmaschinen, Messgeräte, Kühlvorrichtungen, aber auch Ladegeräte für Mobiltelefone oder Radioempfänger betreiben zu können. Ermöglicht wird diese Doppelfunktion durch die bidirektional ausgebildeten AC/DC-Wandler und DC/DC-Wandler der Ladevorrichtung. Dadurch kann wahlweise der Energiefluss im Lade-Modus von der AC-Seite zur DC-Seite und umgekehrt im Wechselrichter-Modus von der DC-Seite zur AC-Seite umgeschaltet werden. Neben dem Lade-Modus und dem Wechselrichter-Modus ist auch ein Hybrid-Modus denkbar, bei dem der Akkumulator der Schweißvorrichtung während des Schweißbetriebs geladen wird. Der Akkumulator der Schweißvorrichtung dient dabei als Puffer bei schwachen Versorgungsnetzen. Als DC-Quelle kann der Akkumulator einer ackubetriebenen, tragbaren Schweißvorrichtung aber auch ein anderer Akkumulator, wie zum Beispiel eine Autobatterie, aber auch ein Photovoltaik-Modul vorzugsweise mit einem Energiespeicher eingesetzt werden.

Wenn die Steuereinrichtung zur Erkennung des Anschlusses einer Last am AC-Ausgang ausgebildet ist, kann die Ladevorrichtung automatisch auf Wechselrichter-Modus umgeschaltet werden, sodass die am AC-Ausgang angeschlossene Last mit elektrischer Energie versorgt werden kann. Die Erkennung des Anschlusses einer Last am AC-Ausgang kann sowohl mechanisch, elektronisch oder optisch durch Detektion der Verbindung eines Steckers am AC-Ausgang erfolgen.

Über eine mit der Steuereinrichtung verbundene Anzeige können verschiedene Betriebszustände der Ladevorrichtung, beispielsweise ob sich diese im Lade-Modus, Hybrid-Modus oder Wechselrichter-Modus befindet, angezeigt und dem Bediener vermittelt werden. Die Verbindung zwischen der Steuereinrichtung und Anzeige kann drahtgebunden oder drahtlos ausgebildet sein. Auch die eingestellte AC-Spannung, die DC-Spannung oder eine bestimmte Ladeart (z.B. normal oder schnell) im Lade-Modus oder Hybrid-Modus können über diese Anzeige dargestellt werden. Die Anzeige kann durch einfache Lichtquellen, insbesondere Leuchtdioden, oder auch LCD-Panele gebildet sein. Um eine Interaktion mit dem Benutzer über die Anzeige zu ermöglichen, kann diese zumindest teilweise auch als Touch-Screen ausgebildet sein.

Gemäß einem weiteren Merkmal der Erfindung ist ein mit der Steuereinrichtung verbundenes Benutzerinterface vorgesehen. Über das Benutzerinterface kann eine einfache und bequeme Einstellung der Funktionen der Ladevorrichtung sowie Darstellung der wichtigsten Betriebszustände oder Einstellungen erfolgen. Das Benutzerinterface kann im einfachsten Fall aus geeigneten Bedienelementen und optischen Signalgebern oder Lichtquellen bestehen oder durch eine geeignete Tastatur und einen Bildschirm oder einen Touch-Screen gebildet sein. Das Benutzerinterface kann auch außerhalb der Ladevorrichtung angeordnet sein und über entsprechende Datenleitungen mit dieser verbunden sein. Beispielsweise ist es auch denkbar, dass das Benutzerinterface in der Schweißvorrichtung oder in einem externen Gerät, wie einem Smartphone, angeordnet ist.

Der AC-Eingang und der AC-Ausgang sind vorzugsweise über einen mit der Steuereinrichtung verbundenen Umschalter, insbesondere einem Relais, mit dem AC/DC-Wandler zur wahlweisen Verbindung des AC-Eingangs oder AC-Ausgangs mit dem AC/DC-Wandler verbunden. Auf diese Weise kann eine galvanische Trennung zwischen dem AC-Eingang und dem AC-Ausgang erfolgen und die Abschaltung des im jeweiligen Modus nicht benötigten Anschlusses, also die Trennung des AC-Ausgangs vom AC/DC-Wandler im Lade-Modus oder Hybrid-Modus und die Trennung des AC-Eingangs vom AC/DC-Wandler im Wechselrichter-Modus, sichergestellt werden. Theoretisch könnte der AC/DC-Wandler auch mit mehreren Ausgängen ausgestattet sein und die Umschaltung intern im AC/DC-Wandler vorgenommen werden.

Vorteilhafterweise ist zumindest ein weiterer DC-Anschluss zur Verbindung und wahlweisen Ladung eines Akkumulators vorgesehen. Dadurch kann über den zumindest einen weiteren DC-Anschluss zusätzlich zum Akkumulator der akkubetriebenen, tragbaren Ladevorrichtung zumindest ein weiterer Akkumulator, beispielsweise eine Autobatterie, mit derselben Ladevorrichtung gegebenenfalls auch gleichzeitig mit dem Akkumulator der Schweißvorrichtung geladen werden.

Wenn der DC-Ausgang und der zumindest eine weitere DC-Anschluss über einen mit der Steuereinrichtung verbundenen Umschalter, insbesondere ein Relais, mit dem DC/DC-Wandler zur wahlweisen Verbindung des DC-Ausgangs oder eines weiteren DC-Anschlusses mit dem DC/DC-Wandler verbunden ist, kann sichergestellt werden, dass jeweils nur ein gewünschter DC-Ausgang oder auch DC-Eingang im Wechselrichter-Modus aktiviert wird.

Vorteilhafterweise ist die AC-Spannung am AC-Ausgang und die AC-Spannung am AC-Eingang variabel. Zu diesem Zweck ist die Ladevorrichtung, insbesondere die bidirektional ausgebildeten AC/DC-Wandler und DC/DC-Wandler zur Abdeckung eines weiten AC-Spannungsbereichs, beispielsweise zwischen einem Nennspannungsbereich von 100 und 230 V, ausgebildet. Dadurch kann die Ladevorrichtung sowohl im Lade-Modus bzw. Hybrid-Modus als auch im Wechselrichter-Modus mit einer AC-Spannung entsprechend der Netzspannung des jeweiligen Landes eingesetzt werden und die Ladevorrichtung für verschiedene Länder baugleich ausgeführt werden. Die Festlegung der AC-Spannung im Wechselrichter-Modus kann manuell über einen Schalter erfolgen oder auch durch entsprechende Auswahl an einem Benutzerinterface, beispielsweise einem Touch-Screen.

Die Überwachungseinheit ist vorzugsweise zur Messung der Gleichspannung und des Gleichstromes am DC-Ausgang und allenfalls weiteren DC-Anschlüssen ausgebildet, und mit der Steuereinrichtung verbunden. Durch die Messung des Stromes und der Spannung am DC-Ausgang oder auch an weiteren DC-Anschlüssen kann im Lade-Modus oder Hybrid-Modus die Ladung des Akkumulators überwacht, gesteuert oder geregelt werden. Ebenso kann durch Messung des Stromes und der Spannung am DC-Ausgang oder den weiteren DC-Anschlüssen im Wechselrichter-Modus der Energiefluss von der DC-Seite zur AC-Seite überwacht und allenfalls für Steuerungs- und/oder Regelungsaufgaben verwendet werden. Über die Messung der Gleichspannung am DC-Ausgang oder einem weiteren DC-Anschluss kann auch die Art der angeschlossenen Akkumulators oder einer anderen DC-Quelle identifiziert werden.

Am Benutzerinterface der Ladevorrichtung kann ein Umschalter zur wahlweisen normalen (beispielsweise 500 W) oder schnellen (beispielsweise 1000 W) Ladung angeordnet sein. Der Umschalter kann als realer Schalter oder auch in Form eines entsprechenden Symbols an einem Touch-Screen ausgeführt sein. Natürlich können auch mehr Ladearten oder Ladekennlinien auch in Abhängigkeit des zu ladenden Akkumulators auswählbar oder einstellbar sein.

Vorzugsweise ist die Steuereinrichtung zur Steuerung und/oder Regelung nach vorgegebenen Ladekennlinien in Abhängigkeit einer am DC-Ausgang anschließbaren DC-Quelle ausgebildet. Daher resultiert ein optimaler Ladevorgang entsprechend einer geeigneten Ladekennlinien für die entsprechende DC-Quellen am DC-Ausgang. Die Auswahl der geeigneten Ladekennlinie kann manuell am Benutzerinterface oder auch automatisch bei Erkennung der DC-Quelle und des Akkumulators erfolgen.

Wenn zumindest ein weiterer DC-Anschluss durch einen Ladestecker gebildet ist, kann eine entsprechende Ladung eines Akkumulators über die Ladevorrichtung erfolgen. Insbesondere gängige Ladestecker, wie USB (Universal Serial Bus)-Stecker oder dgl. sind als Beispiel zu nennen. Dadurch kann die Ladevorrichtung auch zum Laden gängiger mobiler Endgeräte, wie zum Beispiel Smartphones, verwendet werden.

Am DC-Ausgang kann ein mit der Steuereinrichtung verbundener Kommunikationsanschluss zur Verbindung mit einer Kommunikationsleitung der zu ladenden akkubetriebenen, tragbaren Schweißvorrichtung angeordnet sein. Über eine solche Kommunikationsleitung können auch Daten und Informationen mit einem in der Schweißvorrichtung allenfalls vorhandenen Batterie Management Systems (BMS) ausgetauscht werden. Über ein solches Batterie Management System kann der Ladevorgang geregelt und nach Erreichen der gewünschten Ladung gestoppt werden. Auch der Status (z.B. SoC State-of-Charge, SoH State-of-Health, SoP State-of-Power), die Spannung, Kapazität oder Temperatur der Zellen des Akkumulators der Schweißvorrichtung können über die Kommunikationsleitung übermittelt und zur Regelung des Ladevorgangs herangezogen werden. Beispielsweise kann der Ladevorgang eines Akkumulators in Abhängigkeit der oben angeführten Stati geändert werden, indem beispielsweise der Ladestrom vor dem Erreichen der Vollladung gemäß dem SoC reduziert wird oder die Art des Ladens in Abhängigkeit des Alters des Akkumulators entsprechend dem SoH gewählt werden. Im Hybrid-Modus kann der Akkumulator der Schweißvorrichtung auch während des Schweißbetriebs geladen werden. Wird beispielsweise ein Einbruch der Spannung am Akkumulator der Schweißvorrichtung erkannt, kann auf den Hybrid-Modus umgeschaltet werden, in dem die Ladevorrichtung maximale Leistung liefert, welche vorrangig für den Schweißprozess verwendet wird. In den Schweißpausen wird der Akkumulator bevorzugt mit der maximalen Leistung von der Ladevorrichtung geladen. Ab einer definierten Temperatur des Akkumulators kann die Leistung in den Schweißpausen (in der Ladephase) reduziert werden. Diese Funktion wird bevorzugterweise durch eine Kommunikation zwischen dem Batterie Management System und der Ladevorrichtung unterstützt. Der Akkumulator der Schweißvorrichtung dient dabei als Puffer bei schwachen Versorgungsnetzen.

Am AC-Eingang, AC-Ausgang, DC-Ausgang und bzw. oder allenfalls weiteren DC-Anschlüssen können Sicherungen angeordnet sein, um die Komponenten der Ladevorrichtung vor unzulässig hohen Strömen zu schützen.

Vorteilhafterweise ist zwischen AC-Eingang und AC/DC-Wandler ein Netzfilter angeordnet. Durch Netzfilter, welche üblicherweise aus Induktivitäten und Kondensatoren aufgebaut sind, kann die elektromagnetische Verträglichkeit verbessert werden. Geeignete Netzfilter können auch für den AC-Eingang und den DC-Ausgang getrennt angeordnet sein.

Gelöst wird die Aufgabe auch durch eine akkubetriebene, tragbare Schweißvorrichtung, mit einem Akkumulator, bei der eine Ladevorrichtung gemäß der obigen Beschreibung vorgesehen ist. Zu den dadurch erzielbaren Vorteilen wird auf die obige Beschreibung der Ladevorrichtung verwiesen. Die Ladevorrichtung kann als eigenes Gerät ausgebildet sein, welches über entsprechende Ladekabel mit der akkubetriebenen, tragbaren Schweißvorrichtung verbunden werden kann oder eine Aufnahme für den Akkumulator der Schweißvorrichtung aufweisen. Ebenso kann die Ladevorrichtung mit der Schweißvorrichtung gekoppelt werden oder in der Schweißvorrichtung integriert sein.

Die vorliegende Erfindung wird anhand der beigefügten Zeichnungen näher erläutert. Darin zeigen:
- Fig. 1: ein Blockschaltbild einer Ausführungsform einer Ladevorrichtung, welche an einer akkubetriebenen, tragbaren Schweißvorrichtung angeschlossen ist;
- Fig. 2: ein Blockschaltbild einer erweiterten Ausführungsform einer Ladevorrichtung mit einem weiteren DC-Anschluss und AC-Ausgang;
- Fig. 3: ein schematisches Blockschaltbild der Ladevorrichtung im Lade-Modus oder Hybrid-Modus beim Laden des Akkumulators einer Schweißvorrichtung;
- Fig. 4: ein schematisches Blockschaltbild der Ladevorrichtung im Lade-Modus beim Laden eines weiteren Akkumulators;
- Fig. 5: ein schematisches Blockschaltbild der Ladevorrichtung im Wechselrichter-Modus, wobei der Akkumulator einer Schweißvorrichtung als DC-Quelle verwendet wird;
- Fig. 6: ein schematisches Blockschaltbild der Ladevorrichtung im Wechselrichter-Modus, wobei ein weiterer Akkumulator als DC-Quelle verwendet wird;
- Fig. 7: ein Beispiel einer Anzeige der Ladevorrichtung; und
- Fig. 8: das Detail einer Überwachungseinheit der Ladevorrichtung.

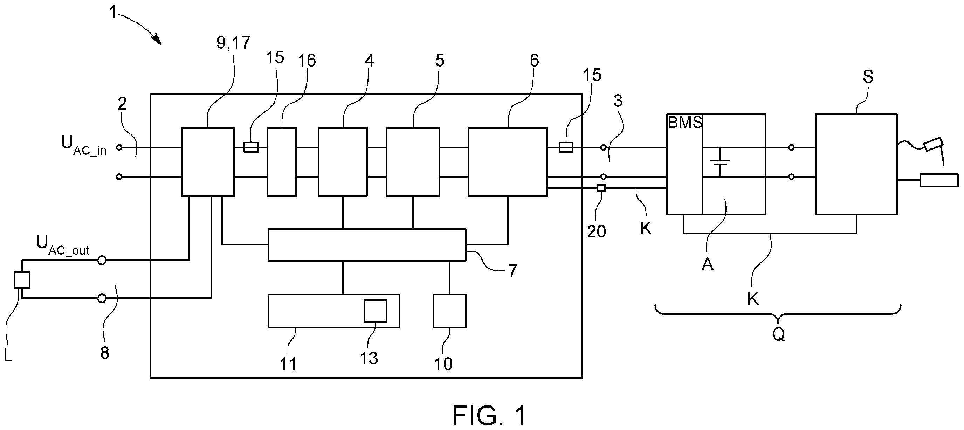

Fig. 1 zeigt ein Blockschaltbild einer Ausführungsform einer Ladevorrichtung 1 zum Laden des Akkumulators A einer akkubetriebenen, tragbaren Schweißvorrichtung S. Die Ladevorrichtung 1 weist einen AC-Eingang 2 auf, der im Lade-Modus mit einem Versorgungsnetz (nicht dargestellt) verbunden wird. Weiters beinhaltet die Ladevorrichtung 1 einen AC/DC-Wandler 4, einen DC/DC-Wandler 5 und einen DC-Ausgang 3, welcher von einer Überwachungseinheit 6 überwacht wird. Eine Steuereinrichtung 7 enthält die Intelligenz der Ladevorrichtung 1 und dient zur Steuerung und/oder Regelung des Ladevorgangs über entsprechende Ladevorgaben oder Ladekennlinien. Dabei können verschiedene Ladearten oder Ladekennlinien für gewisse Akkumulatoren A und auch DC-Quellen Q in einem entsprechenden Speicher (nicht dargestellt) hinterlegt sein und manuell oder automatisch (bei Erkennung der DC-Quelle Q und des Akkumulators A) ausgewählt und für die Ladung im Lade-Modus oder einem Hybrid-Modus verwendet werden, sodass ein optimaler Ladevorgang garantiert werden kann. Im Hybrid-Modus kann der Akkumulator A der Schweißvorrichtung S auch während des Schweißbetriebs geladen werden. Dabei wird die Energie vorrangig für den Schweißprozess verwendet und in den Schweißpausen der Akkumulator A über die Ladevorrichtung 1 geladen. Beispielsweise können über die Steuereinrichtung 7 auch Grenzen (Temperaturgrenzen, Leistungsgrenzen, etc.) gesetzt und verwaltet werden. Zu diesem Zweck ist die Steuereinrichtung 7 mit den anderen Komponenten der Ladevorrichtung 1 verbunden. Erfindungsgemäß ist an der Ladevorrichtung 1 auch ein AC-Ausgang 8 vorgesehen und sind der AC/DC-Wandler 4 und der DC/DC-Wandler 5 bidirektional ausgebildet, sodass die Energie einer am DC-Ausgang 3 anschließbaren DC-Quelle Q zur Versorgung einer am AC-Ausgang 8 anschließbaren Last L umwandelbar ist. Dabei arbeitet die Ladevorrichtung 1 im Wechselrichter-Modus und wandelt die Energie der DC-Quelle Q am DC-Ausgang 3, welcher hier als DC-Eingang fungiert, in eine geeignete Wechselspannung U_{AC_out} am AC-Ausgang 8 der Ladevorrichtung 1 um. Im dargestellten Beispiel ist die DC-Quelle Q durch eine akkubetriebene, tragbare Schweißvorrichtung S mit einem Ackumulator A gebildet und die Energie des Akkumulators A, der am DC-Ausgang 3 angeschlossen ist, dient zur Versorgung einer am AC-Ausgang 8 angeschlossenen Last L. Am DC-Ausgang 3 kann ein mit der Steuereinrichtung 7 verbundener Kommunikationsanschluss 20 zur Verbindung mit einer Kommunikationsleitung K des Akkumulators A der akkumulatorbetriebenen, tragbaren Schweißvorrichtung S angeordnet sein. Mit dem Akkumulator A kann auch ein Batterie Management System BMS verbunden sein, welches die Ladung des Akkumulators A verwaltet. Über die Kommunikation zwischen dem Batterie Management System BMS und der Ladevorrichtung 1 kann auch die Steuerung der Ladung im Hybrid-Modus unterstützt werden.

Mit der Steuereinrichtung 7 ist vorzugsweise ein Benutzerinterface 11 verbunden, über welches der Bediener der Ladevorrichtung 1 Einstellungen vornehmen und Betriebszustände ablesen kann. Beispielsweise kann die Ladeart oder die Art der DC-Quelle Q (Akkumulator, Autobatterie, etc.) eingestellt werden. Über eine mit der Steuereinrichtung 7 verbundene Anzeige 10 können wichtige Informationen oder Betriebszustände der Ladevorrichtung 1 abgelesen werden. Wie in Fig. 1 angedeutet, kann am Benutzerinterface 11 ein Umschalter 13 vorgesehen sein, mit dem man im Lade-Modus oder Hybrid-Modus der Ladevorrichtung 1 zwischen einer normalen und einer schnellen Ladung auswählen kann. Das Benutzerinterface 11 muss nicht zwingend in der Ladevorrichtung 1 angeordnet sein, sondern kann auch in der Schweißvorrichtung S, beispielsweise das Benutzerinterface der Schweißstromquelle, oder einem anderen Gerät, wie zum Beispiel einem Smartphone, angeordnet sein und in geeigneter Art, beispielsweise über Datenleitungen oder auch drahtlos mit der Ladevorrichtung 1 verbunden sein.

Der AC-Eingang 2 und der AC-Ausgang 8 werden vorzugsweise über einen mit der Steuereinrichtung 7 verbundenen Umschalter 9 mit dem AC/DC-Wandler 4 verbunden. Damit kann der AC-Eingang 2 im Lade-Modus oder Hybrid-Modus aktiviert, also mit dem AC/DC-Wandler 4 verbunden werden oder der AC-Ausgang 8 im Wechselrichter-Modus mit dem AC/DC-Wandler 4 verbunden werden. Der Umschalter 9 kann beispielsweise durch ein geeignetes Relais 17 gebildet sein.

Die Steuereinrichtung 7 kann auch zur Erkennung des Anschlusses einer Last L am AC-Ausgang 8 ausgebildet sein. Diese Erkennung des Anschlusses einer Last L am AC-Ausgang 8 kann beispielsweise mechanisch, elektronisch oder optisch durch Detektion der Verbindung eines Steckers am AC-Ausgang 8 erfolgen (nicht dargestellt). Beispielsweise kann zur Erkennung einer Last L eine Messspannung (beispielsweise 15 V) an den AC-Ausgang 8 angelegt werden und über den Stromfluss geschlossen werden, ob eine Last L angeschlossen ist. Allenfalls kann durch entsprechende Auswertung auch erkannt werden, ob es sich um eine ohmsche, kapazitive oder induktive Last L handelt. Bei Erkennung einer Last L am AC-Ausgang 8 kann automatisch eine Umschaltung der Ladevorrichtung 1 in den Wechselrichter-Modus durchgeführt werden, wobei die Last L dann über die Energie des Akkumulators A der Schweißvorrichtung S oder einer anderen externen DC-Quelle Q geladen werden kann.

Zwischen dem AC-Eingang 2 und dem AC/DC-Wandler 4 der Ladevorrichtung 1 kann ein Netzfilter 16 angeordnet sein. Weiters können am AC-Eingang 2, AC-Ausgang 8, DC-Ausgang 3 Sicherungen 15 angeordnet sein.

Natürlich können auch mehrere AC-Ausgänge 8 vorgesehen sein. Die AC-Spannung U_{AC_out} an dem zumindest einen AC-Ausgang 8 sowie die AC-Spannung U_{AC_in} am AC-Eingang 2 ist vorzugsweise variabel. Dadurch kann die Ladevorrichtung 1 baugleich für verschiedene Länder aufgebaut und beispielsweise für eine AC-Spannung U_{AC_out} von 110 V oder 230 V ausgelegt werden.

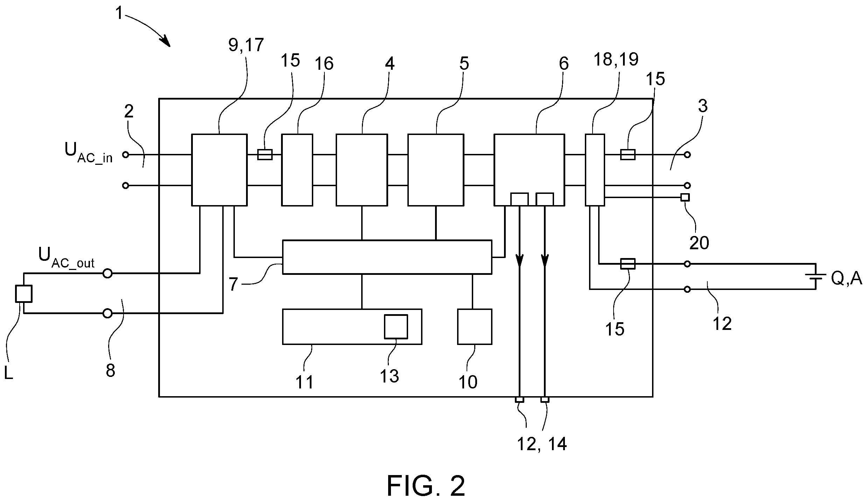

In Fig. 2 ist ein Blockschaltbild einer erweiterten Ausführungsform einer Ladevorrichtung 1 dargestellt. Zusätzlich zur Ausführungsform gemäß Fig. 1 weist die Ladevorrichtung 1 einen weiteren DC-Anschluss 12 auf, der mit einer DC-Quelle Q, insbesondere einem Akkumulator A, verbunden werden kann. Der zumindest eine weitere DC-Anschluss 12 ist vorzugsweise über einen mit der Steuereinrichtung 7 verbundenen Umschalter 18, insbesondere ein Relais 19, mit dem DC/DC-Wandler 5 zur wahlweisen Verbindung des DC-Ausgangs 3 oder eines weiteren DC-Anschlusses 12 mit dem DC/DC-Wandler 5 verbunden. Über den zumindest einen weiteren DC-Anschluss 12 kann ein Akkumulator A im Lade-Modus der Ladevorrichtung geladen werden oder eine DC-Quelle Q zur Versorgung einer am AC-Ausgang 8 angeschlossenen Last L im Wechselrichter-Modus der Ladevorrichtung 1 verwendet werden.

Weiters kann zumindest ein weiterer DC-Anschluss 12 durch einen Ladestecker 14, beispielsweise einen USB-Stecker, gebildet sein, über welche z.B. Mobiltelefone aufgeladen werden können. Auch die weiteren DC-Anschlüsse 12 können über Sicherungen 15 vor unzulässig hohen Strömen geschützt werden.

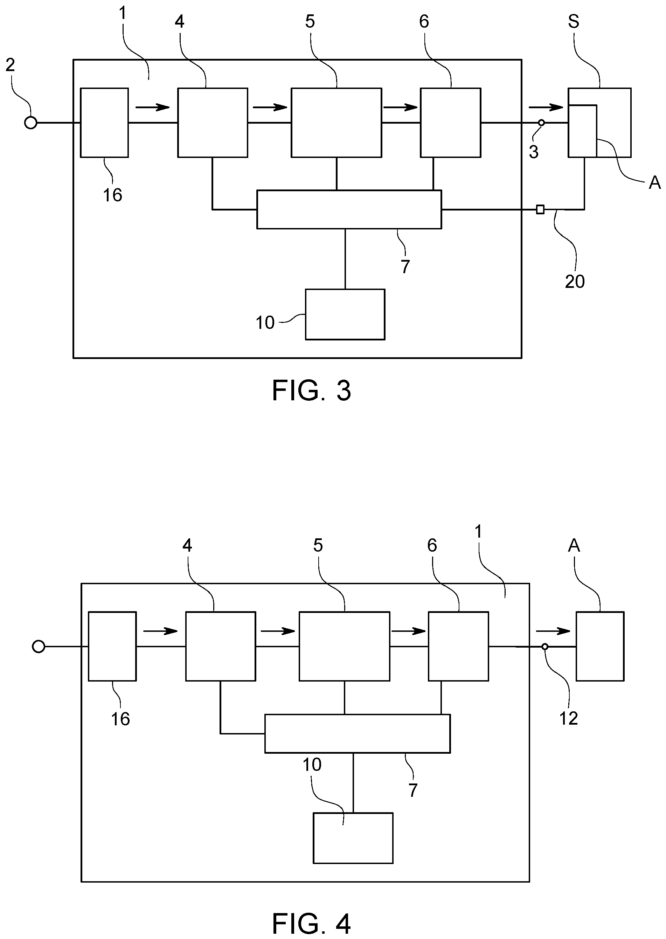

Fig. 3 zeigt ein schematisches Blockschaltbild der Ladevorrichtung 1 im Lade-Modus oder Hybrid-Modus beim Laden des Akkumulators A einer Schweißvorrichtung S. Wie anhand der Pfeile angedeutet, fließt die Energie vom Versorgungsnetz am AC-Eingang 2 über die Komponenten der Ladevorrichtung 1 zum DC-Ausgang 3 in den Akkumulator A der Schweißvorrichtung S.

Fig. 4 zeigt ein schematisches Blockschaltbild der Ladevorrichtung 1 im Lade-Modus beim Laden eines weiteren Akkumulators A, welcher am weiteren DC-Anschluss 12 angeschlossen ist. Beim Ackumulator A kann es sich beispielsweise um eine Autobatterie handeln.

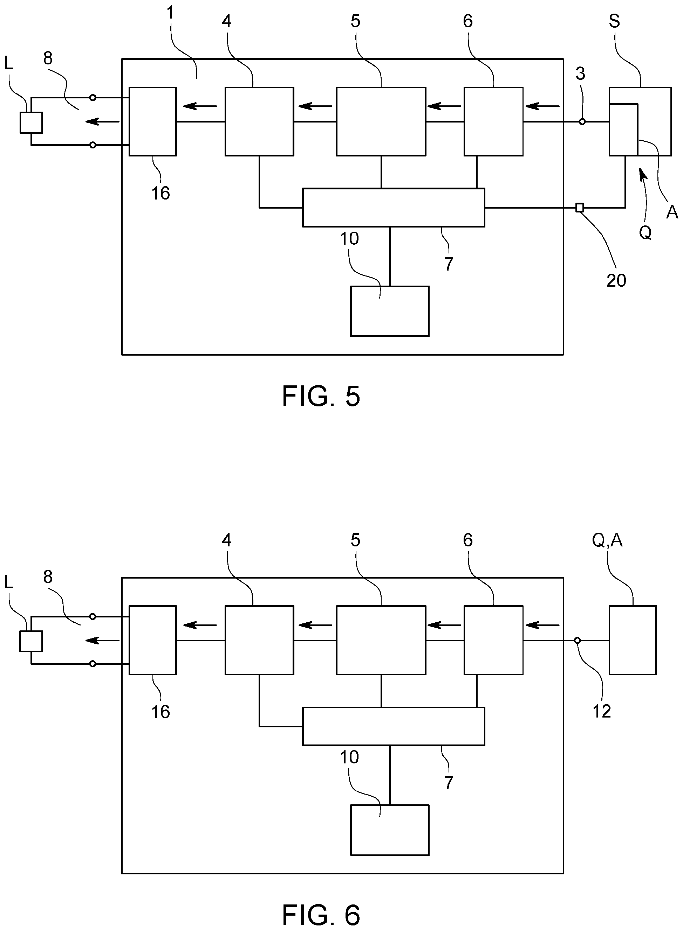

In Fig. 5 ist ein schematisches Blockschaltbild der Ladevorrichtung 1 im Wechselrichter-Modus dargestellt, wobei der Akkumulator A einer Schweißvorrichtung S als DC-Quelle Q verwendet wird. Dementsprechend ist die akkubetriebene, tragbare Schweißvorrichtung S mit dem Akkumulator A am DC-Ausgang 3 der Ladevorrichtung 1 angeschlossen. Die Energie fließt von dem als DC-Eingang fungierenden DC-Ausgang 3 über die Überwachungseinheit 6, den DC/DC-Wandler 5, den hier als DC/AC-Wandler arbeitenden bidirektionalen AC/DC-Wandler 4 zum AC-Ausgang 8, an dem eine Last L angeschlossen ist. Somit kann eine Last L mit AC-Spannung, die aus der Energie des Akkumulators A der Schweißvorrichtung S erzeugt wird, versorgt werden.

Fig. 6 zeigt ein schematisches Blockschaltbild der Ladevorrichtung 1 im Wechselrichter-Modus, wobei ein weiterer Akkumulator A, beispielsweise eine Autobatterie, als DC-Quelle Q verwendet wird und an dem weiteren DC-Anschluss 12 angeschlossen wird. Somit wird eine am AC-Ausgang 8 angeschlossene Last L mit AC-Spannung versorgt, welche aus der Energie der Autobatterie als DC-Quelle Q erzeugt wird.

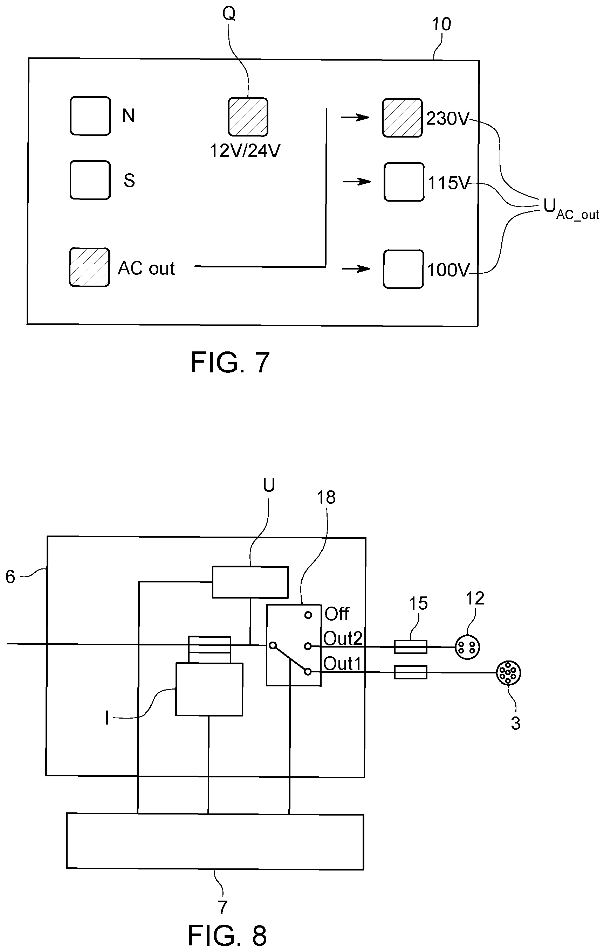

Fig. 7 zeigt ein Beispiel einer Anzeige 10 der Ladevorrichtung 1. Dabei gibt es verschiedene Lichtquellen zur Anzeige der eingestellten AC-Spannung U_{AC_out}, in dem gezeigten Ausführungsbeispiel für 230 V, 115 V und 100 V. Über ein Symbol wird die Spannung einer am weiteren DC-Anschluss 12 angeschlossenen DC-Quelle Q, beispielsweise 12 V/24 V angezeigt und/oder ausgewählt. Weitere Symbole oder Leuchtdioden können zur Anzeige einer am AC-Ausgang 8 angeschlossenen Last L oder zur Anzeige der eingestellten Ladevariante ("N" für normal oder "S" für schnell) oder zur Kennzeichnung von Bedienelementen dienen. Anstelle einzelner Leuchtdioden oder anderer Lichtquellen kann die Anzeige 10 natürlich auch durch ein LCD-Panel, einen Bildschirm oder einen Toch-Screen gebildet werden.

Schließlich ist in Fig. 8 das Detail einer Überwachungseinheit 6 zur Überwachung des DC-Ausgangs 3 und allenfalls weiterer DC-Anschlüsse 12 der Ladevorrichtung 1 wiedergegeben. Der zumindest eine weitere DC-Anschluss 12 könnte bei einer Ausführungsvariante auch direkt am DC/DC Wandler 5 angeordnet sein. Es können beispielsweise unterschiedliche Ausgänge mit unterschiedlichen Wicklungen, für unterschiedliche Ausgangsleistungen bzw. Ausgangsspannungen, angeordnet sein (nicht dargestellt). Die mit der Steuereinrichtung 7 verbundene Überwachungseinheit 6 ist zur Messung der Gleichspannung U und des Gleichstromes I am DC-Ausgang 3 und allenfalls weiteren DC-Anschlüssen 12 ausgebildet. Über die Steuereinrichtung 7 kann ein Umschalter 18 zwischen dem DC-Ausgang 3 und dem zumindest einen weiteren DC-Anschluss 12 umschalten. Über Sicherungen 15 können auch der DC-Ausgang 3 und die weiteren DC-Anschlüsse abgesichert werden. Auch im Akkumulator A können Sicherungen integriert sein (nicht dargestellt).

Die gegenständliche Ladevorrichtung 1 erlaubt eine flexible Anwendung im Lade-Modus bzw. Hybrid-Modus oder Wechselrichter-Modus und ermöglicht neben dem Laden des Akkumulators A einer ackubetriebenen, tragbaren Schweißvorrichtung S auch die Ladung anderer Akkumulatoren A sowie das Betreiben von Geräten mit Wechselspannung über die Energie des Akkumulators A der Schweißvorrichtung S, anderer Akkumulatoren A oder auch anderer DC-Quellen Q, wie zum Beispiel Photovoltaik-Modulen, vorzugsweise mit einem Energiespeicher.

## Patentansprüche

1. Ladevorrichtung (1) für akkubetriebene, tragbare Schweißvorrichtungen (S), mit einem AC-Eingang (2), einem DC-Ausgang (3), einem AC/DC-Wandler (4), einem DC/DC-Wandler (5), einer Überwachungseinheit (6) zur Überwachung des DC-Ausgangs (3) und mit einer Steuereinrichtung (7) zur Steuerung und/oder Regelung des Ladevorgangs, **dadurch gekennzeichnet, dass** ein AC-Ausgang (8) vorgesehen ist, und dass der AC/DC-Wandler (4) und der DC/DC-Wandler (5) bidirektional ausgebildet sind, sodass die Energie einer am DC-Ausgang (3) anschließbaren DC-Quelle (Q) zur Versorgung einer am AC-Ausgang (8) anschließbaren Last (L) umwandelbar ist.

2. Ladevorrichtung (1) nach Anspruch 1, **dadurch gekennzeichnet, dass** die Steuereinrichtung (7) zur Erkennung des Anschlusses einer Last (L) am AC-Ausgang (8) ausgebildet ist.

3. Ladevorrichtung (1) nach Anspruch 1 oder 2, **dadurch gekennzeichnet, dass** eine mit der Steuereinrichtung (7) verbundene Anzeige (10) vorgesehen ist.

4. Ladevorrichtung (1) nach einem der Ansprüche 1 bis 3, **dadurch gekennzeichnet, dass** ein mit der Steuereinrichtung (7) verbundenes Benutzerinterface (11) vorgesehen ist.

5. Ladevorrichtung (1) nach einem der Ansprüche 1 bis 4, **dadurch gekennzeichnet, dass** die Steuereinrichtung (7) zur Steuerung und/oder Regelung nach vorgegebenen Ladekennlinien in Abhängigkeit einer am DC-Ausgang (3) anschließbaren DC-Quelle (Q) ausgebildet ist.

6. Ladevorrichtung (1) nach einem der Ansprüche 1 bis 5, **dadurch gekennzeichnet, dass** der AC-Eingang (2) und der AC-Ausgang (8) über einen mit der Steuereinrichtung (7) verbundenen Umschalter (9), insbesondere einem Relais (17), mit dem AC/DC-Wandler (4) zur wahlweisen Verbindung des AC-Eingangs (2) oder AC-Ausgangs (8) mit dem AC/DC-Wandler (4) verbunden sind.

7. Ladevorrichtung (1) nach einem der Ansprüche 1 bis 6, **dadurch gekennzeichnet, dass** zumindest ein weiterer DC-Anschluss (12) zur Verbindung und wahlweisen Ladung eines Akkumulators (A) vorgesehen ist.

8. Ladevorrichtung (1) nach Anspruch 7, **dadurch gekennzeichnet, dass** der DC-Ausgang (3) und der zumindest eine weitere DC-Anschluss (12) über einen mit der Steuereinrichtung (7) verbundenen Umschalter (18), insbesondere ein Relais (19), mit dem DC/DC-Wandler (5) zur wahlweisen Verbindung des DC-Ausgangs (3) oder eines weiteren DC-Anschlusses (12) mit dem DC/DC-Wandler (5) verbunden ist.

9. Ladevorrichtung (1) nach einem der Ansprüche 1 bis 8, **dadurch gekennzeichnet, dass** die AC-Spannung (U_{AC_out}) am AC-Ausgang (8) und die AC-Spannung (U_{AC_in}) am AC-Eingang (2) variabel ist.

10. Ladevorrichtung (1) nach einem der Ansprüche 1 bis 9, **dadurch gekennzeichnet, dass** die Überwachungseinheit (6) zur Messung der Gleichspannung (U) und des Gleichstromes (I) am DC-Ausgang (3) und allenfalls weiteren DC-Anschlüssen (12) ausgebildet ist, und mit der Steuereinrichtung (7) verbunden ist.

11. Ladevorrichtung (1) nach einem der Ansprüche 4 bis 10, **dadurch gekennzeichnet, dass** am Benutzerinterface (11) ein Umschalter (13) zur wahlweisen normalen oder schnellen Ladung angeordnet ist.

12. Ladevorrichtung (1) nach einem der Ansprüche 7 bis 11, **dadurch gekennzeichnet, dass** zumindest ein weiterer DC-Anschluss (12) durch einen Ladestecker (14) gebildet ist.

13. Ladevorrichtung (1) nach einem der Ansprüche 1 bis 12, **dadurch gekennzeichnet, dass** am DC-Ausgang (3) ein mit der Steuereinrichtung (7) verbundener Kommunikationsanschluss (20) zur Verbindung mit einer Kommunikationsleitung (K) der zu ladenden akkumulatorbetriebenen, tragbaren Schweißvorrichtung (S) angeordnet ist.

14. Ladevorrichtung (1) nach einem der Ansprüche 1 bis 13, **dadurch gekennzeichnet, dass** am AC-Eingang (2), AC-Ausgang (8), DC-Ausgang (3) und bzw. oder allenfalls weiteren DC-Anschlüssen (12) Sicherungen (15) angeordnet sind.

15. Akkubetriebene, tragbare Schweißvorrichtung (S), mit einem Akkumulator (A), **dadurch gekennzeichnet, dass** eine Ladevorrichtung (1) nach einem der Ansprüche 1 bis 14 vorgesehen ist.
